# EUROPEAN PATENT APPLICATION

(11) **EP 1 353 282 A1**
(43) Date of publication of application: **15.10.2003**
(21) Application number: 02007977.8
(22) Date of filing: 10.04.2002
(51) Int. Cl.: G06F 17/60

(54) **A method for tracking the flow of articles in a distribution network**

(71) Applicant: Orell Füssli Security Printing Ltd., 8003 Zürich (CH)
(72) Inventor: Toedtli, Sergej, 8832 Wollerau (CH)
(74) Representative: Blum, Rudolf Emil Ernst

(57) **Abstract**

In a distribution network with having various points (2, 3, 4), such as a manufacturer (2), distributors (3) and points of sale (4), local databases (10) are provided at least at some of the points. When an article arrives at such a point, a record describing it is transferred from a central database (5) to the local database (10). When the article leaves the point, the record is transferred back to the central database (5). In other words, while the article is at a given point, the record remains available for access and modification at the local database (5), which obviates the need to consult the central database (10) each time the record is to be accessed.

## Description

The invention relates to a method for tracking the flow of articles in a distribution network according to the preamble of claim 1.

It has been known to track the flow of articles using a database where a record is maintained for each article. The record may describe various attributes of the article, such as an individual article number, a location and place of manufacturing, its current location, its intended market area, etc. The records have to be updated while the articles are moving through the points of their distribution network.

Tracking articles in this way requires a reliable, fast and secure wide area network for access of the database, which makes it costly and error prone.

Hence, the problem to be solved by the current invention is to provide a method of the type mentioned above that allows to track articles easily and safely on a nation-wide or world-wide basis.

This problem is solved by the method of claim 1. In particular, local databases are provided at least at some of the points in the distribution network. When an article arrives at such a point, its record is transferred to the local database. When it leaves the point, the record is transferred back to the central database. In other words, while the article is at a given point, the record remains available for immediate access and modification at the local database, which obviates the need to contact the central database each time the record is to be accessed.

Preferably, the record contains an attribute describing what (if any) container(s) the article is located in, preferably by indicating a container identifier of an individually numbered container. This is particularly useful when such a container arrives at a given point in the distribution network. After reading the container identifier, the central database can be requested to transfer all the records of the articles within the container to the local database. Similarly, when a container leaves a point of the distribution network, a single command can be issued to transfer all records of the articles in said container back to the central database.

Further preferred embodiments of the invention as well as applications thereof are disclosed in the dependent claims as well as the following description making reference to the enclosed figures. The figures show:
Fig. 1 a schematic illustration of various components of the invention,
Fig. 2 a detailed view of a local network including the local database.

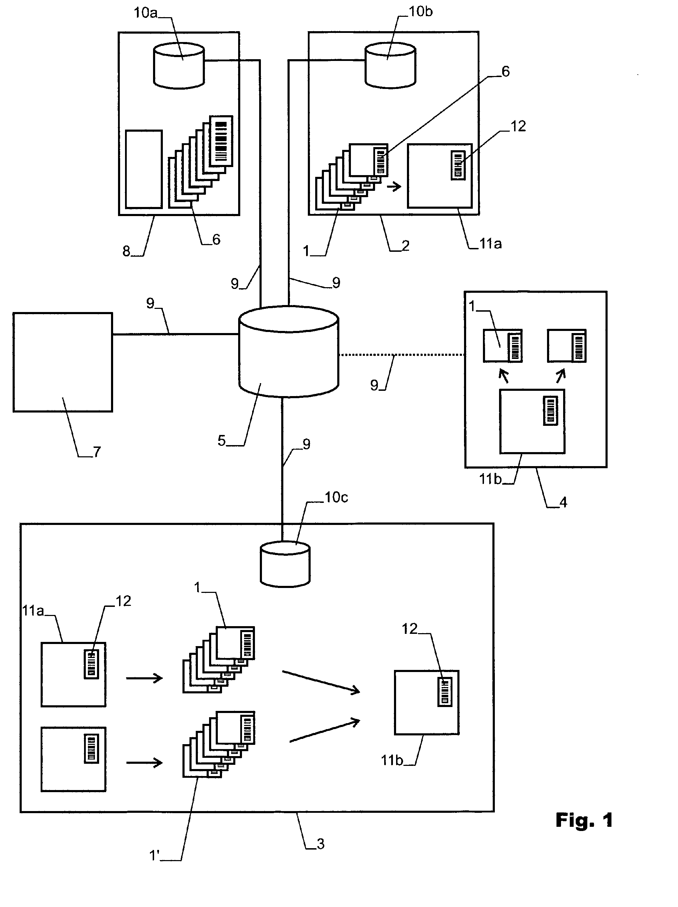

The present invention can be used in an environment as it is, in way of an example, shown in Fig. 1. This may e.g. be a distribution network for articles 1, which are manufactured at a point of assembly 2, shipped to one or more distributors such as the one at point 3 and from there (possibly via further distributors or resellers) to a point of sale 4. The articles may e.g. brand articles of value, such as fashion articles, watches or electronic devices, but they may also be other types of articles, such as cigarettes, automobile parts, etc., where a tracking of the articles is desired. Article tracking may e.g. be desirable when there is a danger of grey or black market activity.

The purpose of tracking articles can e.g. be to make sure that all articles in the distribution network are genuine and that no illegal articles are fed into the network. Also, articles can have defined destination markets and it may be desirable to detect if they appear outside their destination market.

In order to track the articles, a central database 5 is maintained at a secure place. Database 5 holds records for the individual articles in the distribution network, each record containing attributes, i.e. items of information, attributed to one article. A record may e.g. contain the following attributes:
(a) article identifier
(b) record owner
(c) privileges
(d) tag generated
(e) tag affixed to article
(f) last known location
(g) current container(s)
(i) article type
(j) destination market
(k) article history
(l) ...
Attribute (a) is a unique number attributed to each article, which can be used to identify the article and its record. Attribute (b) designates the current owner of a record and attribute (c) the current access privileges of a record as will be described below. Attributes (d) and (e) indicate, as described below, if a tag for the record has been manufactured and affixed to an article. Attribute (f) is updated each time an article passes a point where its article identifier or tag is scanned. Attribute (g) identifies a container the article is placed in, and, if that container is placed in a further container, that further container as well. Attributes (h), (i), (k), (l) etc. may contain further information relating to the article. In particular, attribute (k) may e.g. be updated automatically upon every change of the record to store a history of all modifications of the record.

As can be seen in Fig. 1, a tag 6 is attached to each article 1. The tag may e.g. be a barcode on a sticky label, or it may be any other type of machine and/or human readable unique identifier, such as an RF-tag or a magnetic stripe. The tag can also consist of a marking directly printed on or embossed onto the article, but for increased security it is preferred that the tag is manufactured separately from the article.

In order to illustrate the invention, the following describes how an article is manufactured, sent through the distribution network, and sold.

When a company 7, who is a subscriber to central data base 1, decides to manufacture a batch of articles, it sends an order to database 5 for generating a corresponding batch of records. If, for example, 1000 articles are to be manufactured, a batch of 1050 records is created (with a safety margin taking into account defective tags or other failures). Attribute (a) of each record is set to a unique article identifier and the further attributes may e.g. be initialized as directed by company 7.

Furthermore, a tag manufacturer 8 and the article manufacturer 2 will receive orders to manufacture the corresponding tags 6 and articles 1. This order can either be passed on automatically by central database 5 or it can be sent through other channels from company 7 to manufacturers 2 and 8.

When tag manufacturer 8 is ready to manufacture the 1050 tags, he requests central database 5 to send him the batch of records for the 1050 tags. All these records are then transferred via a secure link from central database 5 through a wide area network (WAN) 9, such as the internet, to a local database 10a of tag manufacturer 8. A secure link is a data connection that establishes the identity of sender and receiver and encrypts the data in such a way that it can only be decrypted by the receiver but not by a third party. Corresponding methods, primarily based on the usage of asymmetric cryptographic key pairs and a public key infrastructure, are known to the person skilled in the art.

When central database 5 sends the records to local database 10a (or any other local database as described below), it sets attribute (b) (record owner) of each record to the corresponding local database. This allows central database 5 to identify who is the current owner of the record. In addition to this, it sets attribute (c) (access privileges) to indicate what attributes the local database 10a may access. In the present example, it may e.g. allow read access to attribute (a) (article identifier) and read/write access to attributes (d) (tag generated), (f) (last location), (g) (container) and (k) (history), while it would not allow any access to the remaining attributes.

Tag manufacturer 8 now prints the tags 6. Each tag encodes the article identifier from attribute (a) of one of the records in local database 10a.

When a tag 6 is printed, its barcode is scanned for checking the success of the printing operation. If the tag is scanned correctly, a corresponding entry is made in attribute (d) of the record, and the location of the tag manufacturer is entered in attribute (f).

During the whole process of tag manufacturing, the corresponding records remain in local database 10a, thereby obviating any need for communication with central database 5.

When all tags are printed, one of them may e.g. be used to identify the whole batch of tags, e.g. by placing it at the very beginning of a rolled up ribbon of tags, or by affixing it to a container of the tags. This one tag is scanned when the tags are shipped and attribute (g) of the records all tags is set to the number of this tag.

When the tags are shipped, the records of all tags are transferred back to central database 5 and the local copies in local database 10a are deleted. Central database 5 resets attribute (b) of the records.

When article manufacturer 2 receives the tags, he reads the one tag identifying the whole batch and sends its number to central database 5 requesting the records for all the tags in the batch. Central database 5 looks for all records whose attribute (g) is equal to the received number. It then sets the access privileges as required (e.g. attributes (a) and (i) to read-only, attributes (e), (f), (g), (j) and (k) to read-write), sets attribute (b) (current owner) and transfers the records securely to the local database 10b of article manufacturer 2. From now on, the records of these articles are maintained by local database 10b and responsibility is only transferred back when an article is shipped, as described further below.

Article manufacturer removes a tag from the batch of received tags and attaches it to an article 1. Each time a tag is attached to its article, it is scanned, attributes (e), (f), (k) are updated and attribute (g) is cleared. From now on, the record is attributed to the corresponding article.

In the present embodiment, article manufacturer 2 places one more articles 1 into a single container 11a for shipping. This container 11a carries a unique identifier 12, which may also be a tag manufactured by tag manufacturer 2. It may also be some other kind of identifier. It must be unique for all containers that are used.

Each time an article 1 is placed in a container, tag 6 of the article and identifier 12 of the container are read and the identifier of the container is stored in attribute (g) of the record attributed to the article.

When the manufacturer ships a container 11a to a given destination, e.g. a place in Europe, he may, for example, also set attribute (j) in order to define a destination market of the articles in the container. For this purpose, he simply reads identifier 12 of the container and instructs local database 10b to update attribute (j) (destination market) all records of articles within that container accordingly.

When a container is shipped, e.g. to distributor 3, all records of articles within it are transferred back to central database 5 and the copies at local database 10b are deleted.

When distributor 3 receives a container 11a, he scans its identifier 12 and requests the records of all articles therein from central database 5. Central database 5 sends these records to a local database 10c of distributor 3 with read-access to fields (a) and (i) and read-write access to fields (f), (g), (j), (k).

Distributor 3 may e.g. unpack the articles, and later pack them in new containers 11b, e.g. when articles are being picked for commissioning an order.

When an article is removed from its container or placed in a new container, attribute (g) at local database 10c is updated accordingly

In a typical example, distributor 3 may e.g. receive an order for some articles 1 and for some articles 1' (of a different type) and he may place them a container 11b. When an article 1 or 1' is placed in the container, the identifier 12 of the container 11b and the tag 6 of the article 1 or 1' are read and attributes (g), (f) and (k) of the article's record at local database 10c are updated accordingly.

Once the container 11b leaves the distributor's site, its identifier 12 is read and all the records of all articles within it are transferred back to central database 5.

In the example of Fig. 1, only a few points of the distribution network are shown. In particular, there may be a larger number of distributors and manufacturers as well as resellers, all of which can be equipped with a local database. When they receive an article, they request its record to be sent (usually together with those of further articles in the same container) to their local database. While the article remains at the corresponding point in the distribution network, no further communication with the central database regarding this article is necessary. Rather, any access to the record can be carried out locally, and changes in the record are stored locally as well. (Note that this does not exclude the possibility that communication between central database 5 and the local database does take place regarding this article, e.g. for backup purposes, but this is not required and usually not time-critical.) Only when an article leaves a point of the distribution network, its record is sent back to central database 5 to update the data stored there.

In order to avoid fraud, the local databases 10a, 10b, 10c should be secure. This means that their hard- and software should be set up in such a way that no access to the records in the local database is possible with the exception of those allowed by the privileges in attribute (c).

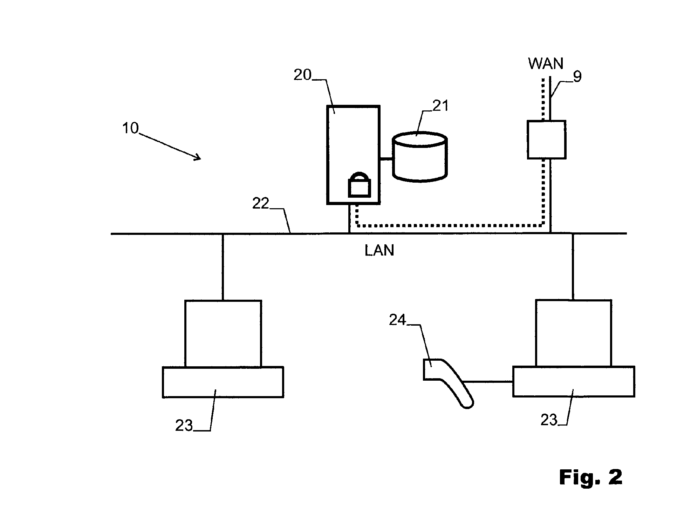

Fig. 2 shows an embodiment of the implementation of a local database 10.

Access to the local database is controlled by a secure computer 20 and the records are stored on a hard disk 21 of that computer. Secure means that it should be physically and programmatically locked to allow access only through a defined database access interface. For example, computer 20 may be equipped to interface with a LAN 22, from where it can be queried using standard database access commands. In addition to this, computer 20 can use LAN 22 to access WAN 9 and hence central database 5. As mentioned above and indicated by a dashed line in Fig. 2, connections to central database 5 will be secure, i.e. they cannot be interpreted or changed by unauthorized parties having access to LAN 22 or WAN 9.

In other words, local database 10 is designed to provide local access only to the entries of the records allowed by the privileges in attribute (c), which were set by central database 5.

For instance, local computers 23 or tag scanners 24 may query or modify the records in the local database in the fields they are privileged to access.

Going back to Fig. 1, it can be seen that some parties may be able to access central database 5 directly. For example, a point of sale 4 may not be sufficiently important to warrant installation of an own secure local database. It may, however, query central database over WAN 9, e.g. in order to check if an article with a given tag is rightfully shipped in a container with a given identifier, or in order to update an article's record when this article is sold.

In addition to this, company 7, who owns the records for a given type of articles, may be allowed to have full or limited direct access to central database 5 over a secure connection.

It must be noted that the above mechanism can be modified in various ways. For instance, it has been described that the records are transferred from central database 5 to one of the local databases 10 and vice, versa. Transfers from central database 5 to a local database 10 may, alternatively, only contain those attributes of the records that are required by the local database, i.e. that the local database is allowed to access. When transferring a record back to the central database, the record may be transferred back in its entirety, or only the modified attributes of the record can be transferred back such that the central database can reconstruct the actual record. If the record has not been changed at the local database, only a confirmation that the record is unchanged can be sent back.

Any transfer of data with sufficient information in order to establish a sufficiently complete record at a local database is termed "transfer of the record to the local database". And any transfer of data with sufficient information for the central database to update the record to its current state is termed "transfer of the record to the central database".

## Claims

1. A method for tracking the flow of articles (1) in a distribution network, wherein a central database (5) is provided for holding records, each record attributed to one article (1) and containing individual attributes (a - k) of said article (1), and wherein the article (1) has a unique tag (6) identifying the record and is moved through several points (2, 3, 4) in the distribution network, wherein at least at some of the points the tag (6) is read and at least some of the attributes are updated, **characterised in that**
local databases (10) are provided at least at some of the points of the distribution network,
when an article (1) arrives at one of the points, the record is downloaded from the central database (5) to the local database (10) of the point,
when the article (1) is processed at said point the record of the article (1) is updated in said local database (10),
when the article (1) leaves said point the record of the article (1) is transferred from the local database (10) to the central database (5).

2. The method of claim 1 wherein one of said attributes indicates a container the article (1) is located in by indicating an individual container identifier (12).

3. The method of claim 2 wherein, when a container arrives at one of said points, all records indicating that they belong to an article (1) in said container, are transferred to the local database (10) of said point.

4. The method of claim 3, wherein, if an article (1) is removed from its container at one point in the distribution network, the article's record in the local database (10) is updated to indicate that the article (1) is not in its container anymore.

5. The method of claim 4, wherein, if an article (1) is placed in a second container, the article's record in the local database (10) is updated to indicate that the article (1) is in the second container.

6. The method of any one of the claims 3 to 5 wherein, when a container leaves from one of said points, all records indicating that they belong to an article (1) in said container, are transferred from the local database (10) of said point to the central database (5).

7. The method of one of the preceding claims wherein, for manufacturing the tags (6) of said articles, said method comprises the following steps:
generating a batch of said records at said central database (5), each record containing a unique article identifier,
transferring said batch of records to the local database (10) of the point in said network where the tags are to be manufactured,
manufacturing each tag (6) by reading the article identifier from one record in said local database (10) and setting in said record an attribute indicating that the tag is manufactured.

8. The method of claim 7 wherein, after manufacturing a tag (6), a check for reading the tag (6) is carried out, and the result of said check is stored in an attribute of the tag's record.

9. The method of one of the claims 7 or 8 wherein, after manufacturing the tags (6), the batch of records is transferred back to said central database (5).

10. The method of one of the claims 7 to 9 further comprising the steps of
transferring the tags (6) manufactured from said batch of records to a point (2) of assembly, where the tags (6) are to be attached to individual articles (1),
when said tags (6) arrive at said point of assembly, transferring the records of the arriving tags from said central database (5) to the local database (10) of the point (2) of assembly and wherein,
when a tag (6) is attached to an article (1), the tag (6) is read and an attribute indicating that it is attached to an article (1) is set in its record.

11. The method of one of the preceding claims wherein each local database (10) is designed to provide local access to only selected attributes of said records.
